# EUROPÄISCHE PATENTSCHRIFT

(11) **EP 1 145 687 B1**
(45) Veröffentlichungstag und Bekanntmachung des Hinweises auf die Patenterteilung: **29.06.2005**
(21) Anmeldenummer: 01108740.0
(22) Anmeldetag: 06.04.2001
(51) Int. Cl.: A61C 1/08, A61C 17/20

(54) **Zahnmedizinisches Handstück**
Dental handpiece
Pièce à main dentaire

(30) Priorität: 11.04.2000 DE 20006633 U
(43) Veröffentlichungstag der Anmeldung: 17.10.2001
(73) Patentinhaber: Kaltenbach & Voigt GmbH & Co. KG, 88400 Biberach/Riss (DE)
(72) Erfinder: Löhn, Gerd, 88400 Biberach-Rissegg (DE)
(74) Vertreter: Schmidt-Evers, Jürgen, Dipl.-Ing.

(56) Entgegenhaltungen:
- EP-A- 0 012 873
- WO-A-95/20363
- FR-A- 2 579 449
- US-A- 1 549 165
- US-A- 5 655 906

## Beschreibung

Die Erfindung betrifft ein zahnmedizinisches Handstück nach dem Oberbegriff des Anspruches 1.

Bei zahnmedizinischen Handstücken, die eine Instrumentenspitze zur mechanischen Bearbeitung von Zahngewebe oder Zahnfleisch aufweisen, ist es aus hygienischen Gründen erforderlich, diese nach jedem Gebrauch zu reinigen und zu sterilisieren um das Verbreiten von Infektionen zu vermeiden. Da die Geräte während der Sterilisation einer relativ hohen Temperatur ausgesetzt werden, besteht die Gefahr, daß innerhalb des Handstücks angeordnete temperaturempfindliche Komponenten durch den wiederholten Sterilisationsvorgang schon nach kurzer Dauer beschädigt werden und ausgewechselt werden müssen, wodurch sich die Wartungskosten für das Gerät entsprechend erhöhen.

In der Regel ist eine Reinigung und Sterilisation der Außenhülle des zahnmedizinischen Handstücks ausreichend, da lediglich diese den kontaminierenden Flüssigkeiten wie z.B. Speichel oder Blut ausgesetzt ist. Aus dem US-Patent Nr. 5,655,906 ist daher ein Zahnsteinentfernungsgerät bekannt, bei dem eine Antriebseinheit zur Übertragung von Schwingungen auf eine die Zahnoberfläche bearbeitende Instrumentenspitze innerhalb eines inneren Gehäuses angeordnet ist, auf das eine Außenhülse aufsetzbar ist. Nach dem Gebrauch und der Demontage der Instrumentenspitze kann die Außenhülse von dem üblicherweise nicht-kontaminierten Innengehäuse abgenommen und separat - wie auch die Instrumentenspitze - sterilisiert werden. Da in diesem Fall das Innengehäuse seltener gereinigt oder sterilisiert werden muß, sind die darin angeordneten Komponenten einer geringeren Belastung ausgesetzt und es wird über einen längeren Zeitraum hinweg ein ordnungsgemäßer Betrieb des gesamten Handstücks ermöglicht.

Um einen sicheren Sitz der Außenhülse auf dem Innengehäuse im zusammengesetzten Zustand zu gewährleisten, ist bei dem in dem US-Patent beschriebenen Handstück zusätzlich eine separate Rastfeder vorgesehen, welche zwischen zwei entsprechenden ringförmigen Nuten in der Außenseite des Innengehäuses und der Innenseite der Außenhülse angeordnet ist und für ein Verrasten sorgt.

Aufgabe der vorliegenden Erfindung ist es, auf eine alternative und einfachere Weise das Verrasten einer Innenhülse mit einer Außenhülse, die gemeinsam die Griffhülse für eine zahnmedizinisches Handstück bilden, zu ermöglichen.

Die Aufgabe wird durch eine längliche Griffhülse, welche die Merkmale des Anspruches 1 aufweist, bzw. durch ein zahnmedizinisches Handstück, welches die Merkmale des Anspruchs 5 aufweist, gelöst. Die erfindungsgemäße Griffhülse besteht aus einer zur Aufnahme einer Antriebseinheit bestimmten Innenhülse sowie aus einer auf die Innenhülse aufschiebbaren und darauf verrastbaren Außenhülse, wobei die Außenhülse an ihrer Innenseite eine ringförmige Ausnehmung aufweist. Erfindungsgemäß weist die Innenhülse einen Ringwulst sowie mehrere diesen Ringwulst unterbrechende axiale Einschlitzungen auf, wobei die Einschlitzungen eine federnde Auslenkung zumindest eines Ringwulstabschnittes ermöglichen, derart, daß der Ringwulst und die ringförmige Ausnehmung der Außenhülse eine Rastverbindung bilden. Im Gegensatz zu dem bekannten zahnmedizinischen Handstück ist hier somit kein separates Bauteil wie beispielsweise eine Rastfeder oder dergleichen notwendig, da die für das Verrasten verwendeten Elemente integraler Bestandteil der Innen- und Außenhülse sind. Dies hat zur Folge, daß die Griffhülse und somit das Handstück insgesamt einfacher hergestellt werden können und daß in regelmäßigen Abständen auch die Innenhülse auf einfache Weise gereinigt werden kann, ohne daß zuvor ein Abnehmen eines daran angeordneten Rastelementes notwendig wäre. Die Wartungsarbeiten für das erfindungsgemäße Handstück werden daher vereinfacht.

Weiterbildungen der Erfindung sind Gegenstand der Unteransprüche. So kann die Innenhülse ferner zumindest eine kreisbogenförmige Einschlitzung aufweisen, welche neben dem federnd auslenkbaren Ringwulstabschnitt angeordnet ist und die diesen Abschnitt begrenzenden axialen Einschlitzungen miteinander verbindet. Ferner kann ein sehr einfaches Lösen der Verrastung und Abnehmen der Außenhülse dadurch erreicht werden, daß die Innenhülse an ihrer Außenseite eine schräg zur Längsrichtung verlaufende Entriegelungsebene aufweist, welche komplementär zu einer schräg verlaufenden Entriegelungsebene an dem der Instrumentenspitze gegenüberliegenden Ende der Außenhülse ausgebildet ist. Das Lösen der zusammengestecken Außen- und Innenhülse erfolgt dann lediglich durch ein in Umfangsrichtung entgegengesetztes Verdrehen. Dadurch, daß im zusammengesteckten Zustand die beiden Entriegelungsebenen aneinander anliegen, werden die beiden Hülsen automatisch durch das Verdrehen voneinander in Längsrichtung entfernt, so daß ein Ziehen zum Überwinden der Verrastung nicht mehr notwendig ist. Auf diese Weise wird das Lösen vereinfacht und der dafür benötigte Kraftaufwand deutlich reduziert.

Das erfindungsgemäße zahnmedizinische Handstück gemäß Anspruch 5 weist eine innerhalb der Griffhülse angeordnete Antriebseinheit auf, um eine mit dieser verbindbare Instrumentenspitze in eine rotierende, oszillierende oder vibrierende Bewegung zu versetzen. Um eine einfache Montage der Instrumentenspitze zu ermöglichen, kann an der Antriebseinheit ein ein Außengewinde aufweisender rohrförmiger Schaft vorgesehen sein. Vor dem Abnehmen der Außenhülse ist es dann notwendig, daß zunächst die Instrumentenspitze demontiert wird. Bei dem erfindungsgemäßen zahnmedizinischen Handstück kann es sich beispielsweise um ein Zahnsteinentfernungsgerät handeln, wobei die Antriebseinheit dann durch einen z.B. pneumatisch betreibbaren Schwingungserzeuger gebildet wird.

Im folgenden soll die Erfindung anhand der beiliegenden Zeichnungen näher erläutert werden. Es zeigen:

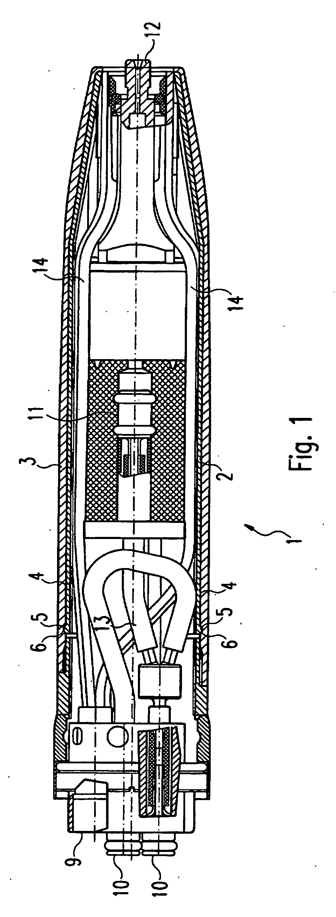

- Fig. 1: ein Ausführungsbeispiel eines erfindungsgemäßen zahnmedizinischen Handstücks im zusammengesetzten Zustand im Schnitt;
- Fig. 2: die Außenhülse des in Figur 1 dargestellten Handstücks;
- Fig. 3: die Innenhülse des in Figur 1 dargestellten Handstücks; und
- Fig. 4: das zahnmedizinische Handstück aus Figur 1 in perspektivischer Darstellung.

Bei dem in der Zeichnung dargestellten Ausführungsbeispiel handelt es sich um ein Zahnsteinentfernungs-Handstück, wie es beispielsweise aus der zuvor erwähnten US 5,655,906 bzw. der DE 8322850 U1 bekannt ist. Die Antriebseinheit besteht aus einem innerhalb der Griffhülse 1 des Handstücks angeordneten pneumatisch betreibbaren Schwingungserzeuger 11, durch den während des Betriebs ein (nicht dargestelltes) hakenförmiges Zahnsteinentfernungs-Werkzeug in Schwingungen versetzt wird. Zur Übertragung der Schwingungsbewegung wird das Werkzeug auf einen am vorderen Ende des Handstücks angeordneten rohrförmigen Schaft 12, der ein Außengewinde aufweist, aufgeschraubt. Die Energiezufuhr für den Schwingungserzeuger 11 erfolgt über Druckluftleitungen 13, welche in ein Anschlußstück 9 münden. Dieses dient zum Anschließen des Handstückes an einen Versorgungsmediumleitungen und/oder Energiezuführleitungen aufweisenden Anschlußschlauch und enthält dementsprechende Anschlüsse 10. Ferner verlaufen innerhalb des Handstückes 1 Lichtleiter 14, welche mit Licht beaufschlagbar sind und dieses zu dem vorderen Ende des Handstücks leiten und somit für eine Beleuchtung des zu bearbeitenden Zahngewebebereiches sorgen.

Sämtliche Elemente der Antriebseinheit sowie die Lichtleiter 14 sind innerhalb einer Innenhülse 2 angeordnet, an deren hinteren Ende das Anschlußstück 9 montiert ist. Auf die Innenhülse 2 ist eine Außenhülse 3 aufgesetzt, welche bei abgenommenem Werkzeug in axialer Richtung nach vorne von der Innenhülse 2 entfernbar ist und somit auf einfache Weise separat gereinigt werden kann.

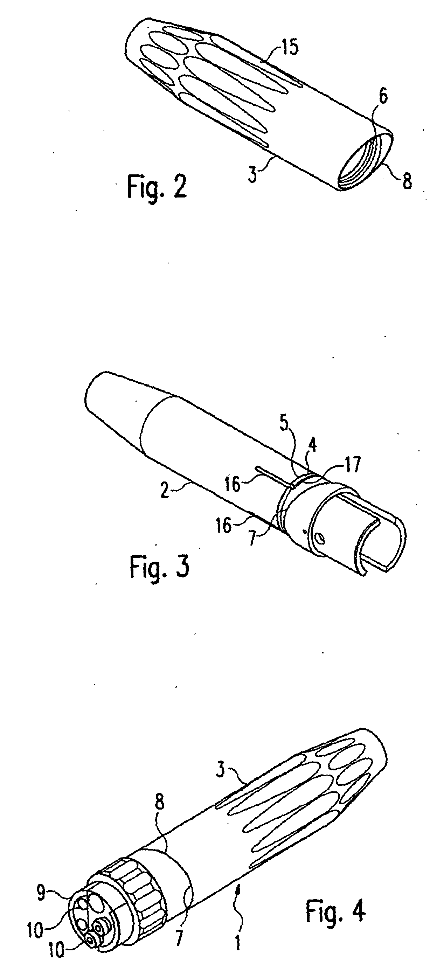

Die genauere Struktur der Außenhülse 3 und der Innenhülse 2 ist in den Figuren 2 und 3 dargestellt. An der Außenseite weist die Außenhülse 3 eine Profilierung 15 auf, welche ein einfaches und sicheres Halten des Handstücks während der Behandlung ermöglicht. Diese Außenhülse 3 besteht vorzugsweise aus einem leicht zu reinigenden und temperaturbeständigen Material. An ihrem werkzeugfernen hinteren Ende weist die Außenhülse 3 ferner an ihrer Innenseite eine ringförmige Nut bzw. Ausnehmung 6 auf, welche mit entsprechenden Elementen der Innenhülse 2 für ein geeignetes Verrasten der beiden Hülsen 2 und 3 gegeneinander sorgt.

Die in Figur 3 dargestellte zylinderförmige Innenhülse 2 dient zur Aufnahme der Antriebseinheit und der Lichtleiter 14. In ihrem hinteren Bereich weist sie an ihrer Außenseite eine schräg zur Längsrichtung verlaufende Entriegelungsebene 7 auf, die komplementär zu einer entsprechenden Entriegelungsebene 8 der Außenhülse 3 ausgebildet ist. Im vorliegenden Beispiel wird die Entriegelungsebene 8 durch das der Instrumentenspitze gegenüberliegende Ende der Außenhülse 3 gebildet, sie könnte allerdings auch an der Innenseite der zylinderförmigen Außenhülse 3 vorgesehen sein. Im zusammengesetzten Zustand der beiden Hülsen 2 und 3, der in Figur 4 dargestellt ist, liegen die beiden Entriegelungsebenen 7 und 8 gegeneinander an.

An der Außenseite der Innenhülse 2 ist einen Ringwulst 4 angeordnet, der durch mehrere axiale Einschlitzungen 16 unterbrochen und in Ringwulstabschnitte unterteilt wird. Der in der Darstellung mit dem Bezugszeichen 5 bezeichnete Ringwulstabschnitt ist dabei federnd auslenkbar, was dadurch erreicht wird, daß zusätzlich eine diesem Ringwulstabschnitt 5 zugeordnete kreisbogenförmige Einschlitzung 17 vorgesehen ist, welche die beiden diesen Ringwulstabschnitt 5 begrenzenden axialen Einschlitzungen 16 miteinander verbindet. Diese kreisbogenförmige Einschlitzung 17 ist allerdings nur dann notwendig, wenn der Ringwulst 4 nicht das Ende der Innenhülse 2 bildet, da in diesem Fall allein die axialen Einschlitzungen 16 für eine federnde Auslenkung sämtlicher Ringwulstabschnitte ausreichend wären. Im vorliegenden Fall ist beispielsweise jedem zweiten Ringwulstabschnitt eine derartige kreisbogenförmige Einschlitzung zugeordnet, so daß auch jeder zweite Abschnitt federnd gelagert ist. In jedem Fall ist zumindest ein Teil der Ringwulstabschnitte federnd auslenkbar, so daß durch den Ringwulst 4 ein ringförmiger Clip gebildet wird, der gemeinsam mit der ringförmigen Ausnehmung 6 an der Innenseite der Außenhülse 3 eine Rastverbindung bildet. Dabei sind keine weiteren Vorrichtungen oder separate Bauteile notwendig, welche für einen geeigneten Halt der Außenhülse 3 auf der Innenhülse 2 sorgen.

Um die beiden Hülsen 2 und 3 zu einer Reinigung und Sterilisation der Außenhülse 3 voneinander zu trennen, werden nach einer Demontage des Werkzeugs beide Hülsen 2 und 3 gegeneinander in Umfangsrichtung des Handstücks 1 verdreht. Aufgrund der aneinander anliegenden schräg verlaufenden Entriegelungsebenen 7 und 8 werden die beiden Hülsen 2 und 3 gegeneinander in axialer Richtung verschoben, d.h. beide Hülsen 2 und 3 werden voneinander getrennt, wobei die Verrastung des Ringwulsts 4 in der ringförmigen Ausnehmung 6 automatisch gelöst wird. Somit ist kein axiales Ziehen der Außenhülse 3 notwendig, wodurch das Trennen der beiden Hülsen 2 und 3 deutlich vereinfacht und der Kraftaufwand reduziert wird.

Das erfindungsgemäße zahnmedizinische Handstück ermöglicht somit auf einfache Weise eine Montage einer vielfach und einfach zu reinigenden und sterilisierenden Außenhülse 3, wodurch die empfindlichen Betriebselemente, wie z.B. die Antriebseinheit oder Lichtleiter zur Beleuchtung geschont werden, da sie nicht so häufig einem Reinigungsprozeß unterzogen werden müssen. Der erfindungsgemäße Verriegelungsmechanismus sorgt auf einfache Weise für einen sicheren und festen Halt der beiden Hülsen gegeneinander im montierten Zustand. Es ist zu ergänzen, daß es sich bei dem erfindungsgemäßen Handstück nicht nur - wie dargestellt - um ein Zahnsteinentfernungsgerät handeln muß, sondern daß es sich dabei beispielsweise auch um ein gerades Bohrhandstück oder auch andere bekannte zahnmedizinische Handstücke handeln kann.

## Patentansprüche

1. Griffhülse für ein längliches zahnmedizinisches Handstück,
bestehend aus einer zur Aufnahme einer Antriebseinheit (11) bestimmten Innenhülse (2) und einer auf die Innenhülse (2) aufschiebbaren und darauf verrastbaren Außenhülse (3),
wobei die Außenhülse an ihrer Innenseite eine ringförmige Ausnehmung (6) aufweist,
**dadurch gekennzeichnet,**
**daß** die Innenhülse (2) einen Ringwulst (4) und diesen unterbrechende axiale Einschlitzungen (16) aufweist, welche eine federnde Auslenkung zumindest eines Ringwulstabschnitts (5) ermöglichen, derart, daß der Ringwulst (4) und die ringförmige Ausnehmung (6) eine Rastverbindung bilden.

2. Griffhülse nach Anspruch 1,
**dadurch gekennzeichnet,**
**daß** die Innenhülse (2) zumindest eine kreisbogenförmige Einschlitzung (17) aufweist, welche neben dem federnd auslenkbaren Ringwulstabschnitt (5) angeordnet ist und die beiden diesen auslenkbaren Ringwulstabschnitt (5) begrenzenden axialen Einschlitzungen (16) verbindet.

3. Griffhülse nach Anspruch 1 oder 2,
**dadurch gekennzeichnet,**
**daß** die Innenhülse (2) an ihrer Außenseite eine schräg zur Längsrichtung verlaufende Entriegelungsebene (7) aufweist, die komplementär zu einer schräg verlaufenden Entriegelungsebene (8) der Außenhülse (3) ausgebildet ist.

4. Griffhülse nach einem der vorherigen Ansprüche,
**dadurch gekennzeichnet,**
**daß** die Außenhülse (3) an ihrer Außenseite eine Profilierung (15) aufweist.

5. Zahnmedizinisches Handstück mit
einer länglichen Griffhülse (1), an deren vorderen Ende eine Instrumentenspitze zur mechanischen Bearbeitung eines Zahngewebebereichs befestigbar ist, sowie
einer in der Griffhülse (1) angeordneten Antriebseinheit (11), um die mit dieser verbindbare Instrumentenspitze in eine rotierende, oszillierende oder vibrierende Bewegung zu versetzen,
wobei die Griffhülse (1) aus einer Innenhülse (2), in der die Antriebseinheit (11) angeordnet ist, sowie aus einer auf die Innenhülse (2) aufschiebbaren und darauf verrastbaren Außenhülse (3) besteht und die Außenhülse (3) an ihrer Innenseite eine ringförmige Ausnehmung (6) aufweist,
**dadurch gekennzeichnet,**
**daß** die Innenhülse (2) einen Ringwulst (4) und diesen unterbrechende axiale Einschlitzungen (16) aufweist, welche eine federnde Auslenkung zumindest eines Ringwulstabschnitts (5) ermöglichen, derart, daß der Ringwulst (4) und die ringförmige Ausnehmung (6) eine Rastverbindung bilden.

6. Zahnmedizinisches Handstück nach Anspruch 5,
**dadurch gekennzeichnet,**
**daß** die Innenhülse (2) zumindest eine kreisbogenförmige Einschlitzung (17) aufweist, welche neben dem federnd auslenkbaren Ringwulstabschnitt (5) angeordnet ist und die beiden diesen auslenkbaren Ringwulstabschnitt (5) begrenzenden axialen Einschlitzungen (17) verbindet.

7. Zahnmedizinisches Handstück nach Anspruch 5 oder 6,
**dadurch gekennzeichnet,**
**daß** die Antriebseinheit (11) zur Halterung der Instrumentenspitze einen ein Außengewinde aufweisenden rohrförmigen Schaft (12) aufweist.

8. Zahnmedizinisches Handstück nach einem der Ansprüche 5 bis 7,
**dadurch gekennzeichnet,**
**daß** dieses an seinem der Instrumentenspitze gegenüberliegenden Ende ein Anschlußstück (9) zum Anschließen an einen Versorgungsmediumleitungen und/oder Energiezuführleitungen aufweisenden Anschlußschlauch aufweist.

9. Zahnmedizinisches Handstück nach einem der Ansprüche 5 bis 8,
**dadurch gekennzeichnet,**
**daß** die Antriebseinheit ein Schwingungserzeuger (11) ist, der zur Schwingungsübertragung mit einem Zahnsteinentfernungs-Werkzeug verbindbar ist.

10. Zahnmedizinisches Handstück nach Anspruch 9,
**dadurch gekennzeichnet,**
**daß** der Schwingungserzeuger (11) pneumatisch betreibbar ist.

## Claims

1. Grip **s**leeve for an elongate dental handpiece, comprised of an inner sleeve (2) intended for receiving a drive unit (11) and an outer sleeve (3) which can be pushed onto the inner sleeve (2) and latched thereon,
wherein the outer sleeve has at its inner side a ring-shaped recess (6),
**characterized in that**,
the inner sleeve (2) has a ring bead (4) and axial slits (16) which interrupt the ring bead, which make possible a spring deflection of at least a section (5) of the ring bead, such that the ring bead (4) and the ring-shaped recess (6) form a latch connection.

2. Grip sleeve according to claim 1,
**characterized in that**,
the inner sleeve (2) has at least one arc-shaped slit (17) which is arranged next to the spring deflectable ring bead section (5) and which connects the two axial slits (16) bounding this deflectable ring bead section (5).

3. Grip sleeve according to claim 1 or 2,
**characterized in that**,
the inner sleeve (2) has on its outer side an unlocking plane (7) developing obliquely to the longitudinal direction, which plane is formed complementarily to an obliquely developing unlocking plane (8) of the outer sleeve (3).

4. Grip sleeve according to any preceding claim,
**characterized in that**,
the outer sleeve (3) has on its outer side a profiling (15).

5. Dental handpiece having
an elongate grip sleeve (1) to the forward end of which an instrument tip can be attached for the mechanical working of a tooth tissue region, and
a drive unit (11) arranged in the grip sleeve (1), in order to set the instrument tip connectable therewith into a rotating, oscillating or vibrating motion,
wherein the grip sleeve (1) is comprised of an inner sleeve (2), in which the drive unit (11) is arranged, and an outer sleeve (3) which can be pushed onto the inner sleeve (2) and latched thereon, and the outer sleeve (3) has at its inner side a ring-shaped recess (2),
**characterized in that**,
the inner sleeve (2) has a ring bead (4) and axial slits (16) which interrupt the ring bead, which make possible a spring deflection of at least a section (5) of the ring bead, such that the ring bead (4) and the ring-shaped recess (6) form a latch connection.

6. Dental handpiece according to claim 5,
**characterized in that**,
the inner sleeve (2) has at least one arc-shaped slit (17) which is arranged next to the spring deflectable ring bead section (5) and which connects the two axial slits (16) bounding this deflectable ring bead section (5).

7. Dental handpiece according to claim 5 or 6,
**characterized in that**,
for holding the instrument tip the drive unit has a tube-like shaft (12) having an external thread.

8. Dental handpiece according to any of claims 5 to 7,
**characterized in that**,
this has at its end opposite to the instrument tip a connection piece (9) for the connection of a connection hose having supply medium lines and/or energy delivery lines.

9. Dental handpiece according to any of claims 5 to 8,
**characterized in that**,
the drive unit is an oscillation generator (11) which for transmission of oscillations is connectable with a plaque removal tool.

10. Dental handpiece according to claim 9,
**characterized in that**,
the oscillation generator (11) is pneumatically operable.

## Revendications

1. Fourreau pour une pièce à main dentaire oblongue,
comprenant un manchon intérieur rigide (2) pour le logement d'un ensemble propulsif (11) et un manchon extérieur (3), pouvant être enfilé et dans ce cas enclenché sur le manchon intérieur (2),
dans lequel l'intérieur du manchon extérieur a une gorge circulaire (6),
**caractérisé en ce que**
le manchon intérieur (2) comprend un renflement annulaire (4) ainsi que plusieurs fentes axiales (16) interrompant celui-ci, lesquelles permettent l'élasticité d'au moins une section (5) du renflement annulaire, de façon que le renflement annulaire (4) et la gorge (6) circulaire s'enclenchent.

2. Fourreau selon la revendication 1,
**caractérisé en ce que**
le manchon intérieur (2) comprend au moins une fente en arc de cercle (17), ladite fente se situe près de la section (5) du renflement annulaire pouvant bouger par élasticité et relie les deux fentes axiales terminales (16), cette section de renflement annulaire (5) pouvant bouger par élasticité.

3. Fourreau selon la revendication 1 ou 2,
**caractérisé en ce que**
le manchon intérieur (2) présente à l'arrière un plan de déverrouillage (7) en biais par rapport à l'axe longitudinal, et complémentaire au plan correspondant de déverrouillage (8) du manchon extérieur (3).

4. Fourreau selon l'une quelconque des précédentes revendications,
**caractérisé en ce que**
le manchon extérieur (3) comprend à l'extérieur un façonnage (15).

5. Pièce à main dentaire avec
un fourreau (1) oblong, à l'extrémité duquel peut être fixé un embout d'instrument ayant pour but le traitement par voie mécanique d'un secteur du tissu dentaire, ainsi qu'un
ensemble propulsif (11) disposé dans le fourreau (1) transmettant à l'embout raccordable à l'instrument un mouvement rotatif, oscillant ou vibrant,
dans lequel le fourreau (1) comprend un manchon intérieur (2), à l'intérieur duquel est disposé l'ensemble propulsif (11), ainsi qu'un manchon extérieur (3) qui peut être enfilé et enclenché sur le manchon intérieur (2) et dans lequel le manchon extérieur (3) est pourvu d'une gorge circulaire (6) sur sa paroi interne,
**caractérisée en ce que**
le manchon intérieur (2) comprend un renflement annulaire (4) ainsi que plusieurs fentes axiales (16) interrompant celui-ci, lesquelles permettent l'élasticité d'au moins une section (5) du renflement annulaire, de façon que le renflement annulaire (4) et le gorge circulaire (6) s'enclenchent.

6. Pièce à main dentaire selon la revendication 5,
**caractérisée en ce que**
le manchon intérieur (2) comprend au moins une fente en arc de cercle (17) située près de la section (5) du renflement annulaire bougeant par élasticité et qui relie les deux fentes axiales terminales (17) des sections (5) du renflement annulaire bougeant par élasticité.

7. Pièce à main dentaire selon la revendication 5 ou 6,
**caractérisée en ce que**
l'ensemble propulsif (11) comprend une tige tubulaire (12) filetée sur l'extérieur pour la fixation de l'embout de l'instrument.

8. Pièce à main dentaire selon l'une quelconque des revendications 5 à 7,
**caractérisée en ce que**
ladite pièce à main comprend à l'extrémité opposée à l'embout de l'instrument un raccord (9) qui permet de raccorder la pièce à main à une conduite d'approvisionnement et/ou à une alimentation en énergie avec des raccordements adéquats.

9. Pièce à main dentaire selon l'une quelconque des revendications 5 à 8,
**caractérisée en ce que**
l'ensemble propulsif est un vibrateur (11) qui est raccordable en transfert de vibrations à un outil de détartrage.

10. Pièce à main dentaire selon la revendication 9,
**caractérisée en ce que**
le vibrateur (11) peut fonctionner sous air comprimé.
